# EUROPÄISCHE PATENTANMELDUNG

(11) **EP 2 050 364 A2**
(43) Veröffentlichungstag der Anmeldung: **22.04.2009**
(21) Anmeldenummer: 08013673.2
(22) Anmeldetag: 30.07.2008
(51) Int. Cl.: A47C 27/14, A47C 27/20

(54) **Abstandshalter aus Schaumstoff zur Füllung von Matratzenkernen, Polsterungen und Kissen**

(30) Priorität: 27.06.2007 DE 202007008971 U
(71) Anmelder: Weber, Erhard, 49082 Osnabrück (DE)
(72) Erfinder: Weber, Erhard, 49082 Osnabrück (DE)
(74) Vertreter: LENZING GERBER

(57) **Zusammenfassung**

Es werden elastisch stauchbare und flexible Abstandshalter (5,5') aus Schaumstoff oder ähnlich stauchfähigem Material zur Füllung von Matratzenkernen, Polsterungen und Kissen beschrieben, die als Rippen oder Röhren artige Strukturen in Reihen stehend oder liegend angeordnet und miteinander verbunden und an mindestens einer Seite auf einer elastisch nachgiebigen Deckplatte (10,10') oder Umhüllung (20,20') angeordnet und darauf fixiert sind.
Diese Abstandshalter (5,5') vermeiden die Steifigkeit von Blockschaumstoff und werden in einer Vielzahl von geometrischen Formen eingesetzt. Sie ermöglichen eine Schaumstoff Ersparnis von einem Faktor 2 bis 3, eine Zonenvariation und das Einsetzen von zusätzlichen Federelementen und ergeben eine Superventilation des Matratzenkerns. Eine Rollverpackung ist möglich.

## Beschreibung

Die Erfindung betrifft Matratzenkerne, Polsterungen und Kissen, die im Inneren in vielfältiger Weise aus Schaumstoff Abstandsträgern bestehen, welche zwischen Deckenplatten oder Umhüllungen in einer Sandwich Konstruktion eingesetzt sind und einen Schaumstoff Volumen Sparfaktor für den Innenkerns von etwa 2 bis 3 aufweisen.
1. Die Hauptintension und der -vorteil dieser Erfindung besteht darin, die Block-Steifigkeit von insbesondere HR (High Resilient) Polyurethan und -ether Kalt - Schaumstoffen mit einer Vielzahl von Sandwich Konstruktionen zu vermeiden.
   Die abknickende, nicht lineare Elastizitätscharakteristik, die progresive Blocksteifigkeit, von Schaumstoffblöcken ergibt sich aus Folgendem:
   - Bei geringer Hubkompression (1 bis 2 cm Eindringtiefe) ist die Abhängigkeit, Absenkhub zu ausgeübten Flächendruck, anfänglich annähernd linear.
   - Danach biegt die Hub/Druck - Kurve stark um, da immer tiefere Schaumstoff Bereiche Volumen komprimiert werden, und
   - immer größere Bereiche über die eigentliche Druckfläche hinaus von allen Seiten mit in das Hubeindringen einbezogen werden. Dabei wird die Zugelastizität insbesondere des (Kalt-) Schaumstoffes beansprucht, welche inherent aufgrund des Aufbaus aus lauter Bläschen eingeschränkt ist.
   Bei Schaumstoffen aus Kunst- und Natur- Kautschuk, z.B. Moosgummi oder Latex , ist die Zugelastizität höher. Letztere eignen sich aufgrund ihrer Softigkeit, Luftundurchlässigkeit und ihres Gewichts weniger für die Innenkern Konstruktion aus Abstandshaltern.
   Die Abstandshaltern (-Rippen) werden vertikal stehend oder horizontal liegend eingesetzt in genügendem Abstand voneinander, um eine ungehinderte elastische Stauchverformung bei der stützenden Absenkung zur Anpassung an die aufliegende Körperkontur zu ermöglichen, so daß für hohe Kompressions Faktoren die Elastizitätscharakteristik annähernd linear verläuft.
   Bei kleinen Rippenstärken (1 bis 2 cm) im Verhältnis zu ihrem mittleren Abstand kommt es zu einem Einknicken bei großer Belastung, sodass die Elastizitätscharakteristik sogar geringer als linear verläuft. Dazu sind die Abstandsträger (-Rippen) so konfiguriert und angeordnet, daß sie genügend weit voneinander entfernt sind, mit einer Volumen Füllung von nur etwa 1/4 bis 1/2.
   Erst wenn die Block Konsitenz bei einer Kompression auf etwa 1/3 bis 1/4 der Anfangshöhe erreicht wird, setzt die oben beschriebene inherente Steifheit eines kompakten Schaumstoff Blockes allmählich ein.
   Weiter erfinderungsgemäße Vorteile der Sandwich Konstruktion gegenüber (auch Kontur geschnittenen) Schaumstoff Vollkernen werden im Folgenden angeführt, insbesondere die große Vielfalt von neu eingeführten Freiheitsgraden:
2. Die geometrische Form, die Höhe und die Einbaulage der Abstandshalter kann gewählt und angepasst werden für verschiedene Anwendungen und diese können in Reihen oder Lagen angeordnet sein. Die Einbaulage wird am besten definiert über die Formebene der Abstandshalter. Diese Formebene ist diejenige Fläche, welche durch die Figuren-, Querschnitts- oder die Verlaufsform der Abstandshalter aufgespannt wird.
   Die Abstandshalter werden zwischen den Deckenplatten in den durch die Formebene definierten Lagen eingebaut: horizontal liegend oder vertikal aufrecht stehend.
   Sie können in Matratzenkernen, Polsterungen oder Kissen transversal oder longituinal verlaufen.
   Es können Sinus -, X-, V-, 8 - und Hohlzylinder förmige, als auch Mäanderband artige Abstandshalter eingesetzt werden. Alle liefern eine ausgezeichnete Punktelastizität.
   Selbst mit Abstandsträgern aus hochwertigem HR- Kalt -, Polyurethan und - ether, Schaumstoffen mit hohem Raumgewicht und höherer Stauchhärte können sehr softige Matratzenkerne hergestellt werden, ohne die sonst zwangsläufige Gefahr der Muldenbildung wie sonst bei softigen Block Schaumstoff Kernen unter konstanter Dauerbelastung.
3. Für verschiedene Anwendungen werden eine geometrische Vielzahl von Abstandsträgern angegeben und entwickelt:
   X-, V- und Sinus - artige geformte Abstandshalter können durch einen Streck- Stauch Prozess entwickelt werden aus den entsprechen vorgeschnittenen Ausgangs Schaumstoff Blöcken unter Variation:
   der Länge und des Abstandes der vorgeschnittenen Schlitze,
   der Länge, Dicke und Höhe der Abstandshalter,
   des Abstandes der ungeschnittenen Verbindungs- und der Endstücke, sowie der Möglichkeit auch in den Verbindungsstücken Teilschnitte in dem Ausgangsblock einzubringen und auf diese Weise die Höhe der die Abstandshalter verbindenden Brücken zu reduzieren.
4. Es besteht die Möglichkeit zusätzliche Federelemente in die Öffnungen insbesondere der liegenden Abstandsträgern einzuf-ul'iren:
   Taschenfedern einzeln oder als Doppel oder
   freie Spiralfedern oder Ringe aus (Stahl-) Draht oder Plastik
   oder Füllungen mit Schaumstoff Körpern von anderer(m) Stauhärte und Raumgewicht,
   alle in verschiedener Form, Höhe, Drahtstärke und Vorspannung,
   in unterschiedlichen Passungen und unterschiedlichen Füllmustern.
   Durch die Variation der Dimension der eingesetzten Spiralfedern relativ zur Öffnung, d.h. ihre Passung, sind die zwei Extremfälle möglich::
      a) Die z.B. Tonnen förmigen Spiralfedern sind weitgehend frei beweglich in den Öffnungen der Abstandshalter, auch wenn sich diese bei der Stauch - Kompression verengen, d.h. ihr größter Windungsdurchmesser ist kleiner als der freie Durchmessser der Öffnungen.
         Dann sind die äußeren Spiralwindungen, insbesondere der Tonnenfedern frei beweglich hinab bis zu ihrem größten Mittelwindungen.
      b) Die Spiralfeder sind eng in die Öffnungen eingepaßt und bei der Stauch - Kompression werden auch die engeren äußeren Windungen allmählich am Einfedern gehindert.
         Dieser Effekt reduziert erheblich die Elastizität / Nachgiebigkeit der Kombination: Spiralfeder- Abstandsträger aus Schaumstoff.
         Auf diese Weise können sowohl der Drahtdurchmesser der Spiralfedern als auch die Dicke der Abstandsträger Rippen deutlich reduziert werden, bei gleichbleibender Gesamtelastizität. Auf diese Weise kann sowohl am Schaumstoff- als auch am Drahteinsatz gespart werden. Natürlich sind alle intermediären Fälle zwischen den beiden Extremen möglich und eröffnen eine breite Variation der Elastizität und der Zonen im Matratzenkern, welche ergänzt werden durch den auch möglichen Einsatz von:
         Mittelringen eingesetzt in einzelne Öffnungen,
         von zwei kleineren, zusammenhängenden Taschenfedern, in die Schlitzaugen Öffnungen der z.B. Sinus- förmigen Abstandshalter, und
         von freien, nicht eingetaschten Spiralfedern, vorteilhafter weise mit geringerer Höhe als die umgebenden Abstandshalter, wobei die umgebenden Schaumstoff Rippen als Taschen fungieren.
5. Eine Volumen - Einsparung des eingesetzten Schaumstoffes um mindestens einen Faktor 2 bis 3 im Innenkern der Matratze ist möglich ohne jegliche Verschnittverluste und zusätzliche Schneidekosten wie z.B. für Kontur geschnittene Kerne. Die inherente Kompression beläuft sich dann auf einen Faktor zwei bis drei, wobei eine zusätzliche Verpackungskompression um einen weiteren Faktor 2 möglich ist.
   Auch eine Roll Verpackung der konfektionierten Abstandshalter Matratzenkerne ist möglich.
6. Eine ausgezeichnete Ventilation und Transpiration, vergleichbar mit Bonnell Federkernen, ist vorhanden, sowie ein zusätzlicher Pumpeffekt durch das sich verändernde Volumen der Kammern, da die Hälfte bis zu Zweidritteln des inneren Kern- Volumens aus diesen Kammern besteht.
7. Es ist eine vielfältige Variation in einzelne Zonenbereiche und der Elastizität der Matratze möglich:
   durch Wahl und Veränderung des Raumgewichts und/oder der Stauchhärte des verwendeten (Kalt-) Schaumes, insbesondere in einer Zonen- Aufteilung des Schaumstoff AusgangsBlockes bzw. des inneren Matratzenkerns,
   durch Einsetzen z.B. von Taschen Spiralfedern in die Öffnungen, welche durch die umgebenden Schaumstoff- Abstandshalter total voneinander entkoppelt sind,
   durch das Einsetzten einer oder zweier Reihen von Taschenfedern können die Längs - und die Querränder der Matratze leicht verstärkt werden,
   das Verklebungsmuster der Abstandshalter und insbesondere der Deck- und Bodenplatten kann verschieden gewählt werden, und
   transversale Streifen aus Block Schaumstoff können in den Lordose Bereichen zur Unterstützung eingesetzt werden.
   Mit all den angeführten Punkten erscheint die Zahl der Variations Möglichkeiten nahe an Unendlich zu liegen.
8. Diese Sandwich Konstruktion ist sowohl für Matratzenkerne (Designer Matratze mit sehr individueller Anpassungen an die Körperform), für Kissen, als auch für Polsterungen für Sofas, Sitzbänke, Auto- und Flugzeug- Sitze und für Lastwagen- und Boot- Schlafbetten geeignet.
9. Auch zwei- und dreistöckige Abstandshalter Konfigurationen sind möglich, die leicht die Höhe von Amerikanischen box-spring Matratzen erreichen können und eine viel bessere Punkt- elastizität und Kontur Anpassung aufweisen.
10. Abstandshalter Lagen können auch als Topper auf einer oder beiden Seiten von, z.B. herkömmlichen Bonnell oder Taschenfeder Kernen genutzt werden.
11. Ein- oder zweistöckige Abstandshalter, die an Schaumstoff Platten oder Streifen geklebt sind, können zur inneren Dämpfung von Wasserbetten Verwendung finden.
12. Einfache Montage Vorrichtungen für den Prozess des Spreizens und des Auseinanderziehens wurden entwickelt, um die Abstandshalter aus einem geschlitzten Ausgangs Schaumblock herzustellen, als auch einfache Hochdruck Wasserstrahl- oder mechanische Schlitzschneide Vorrichtungen.

### Stand der Technik

Matratzenkerne bestehen bis heute aus kompakten oder Kontur geschnittenen Schaumstoffblöcken oder aus Stahl Spiralfedern mit oder ohne Schaumstoff Umhüllung.

In den Europa Patenten EP 0 642 332 B1 und EP 0 793 932 B1 wird ein "Elastic springy element and springy support provided with such springy elements" beschrieben im Hauptanspruch mit: "Elastic springy element which comprise a tubular foam body (2) which is provided with holes (cavities) (3) extending inwards from the outside, characterized in that it comprises a wire spring (4) which is surrounded by the body."

Die hier beschriebenen Abstandshaltern aus Schaumstoff unterscheiden sich inherent von dieser Anmeldung da sie aus in sich nicht geschnittenen Unterstützungs- Elementen bestehen. Ihre Federkraft und Elastizität resultiert sowohl aus der elastischen Volumen Kompression und der Stauch- Deformation und vermeidet weitgehend die Block Steifigkeit von durchgehenden Schaumstoff Blöcken aufgrund der Dimensions Reduktion auf die in der Hauptsache Rippen- artige Struktur der Abstandshaltern. Die Abstandshalter haben in der Hauptsache keinen in sich geschnittene Röhrenkörper.

### Figuren

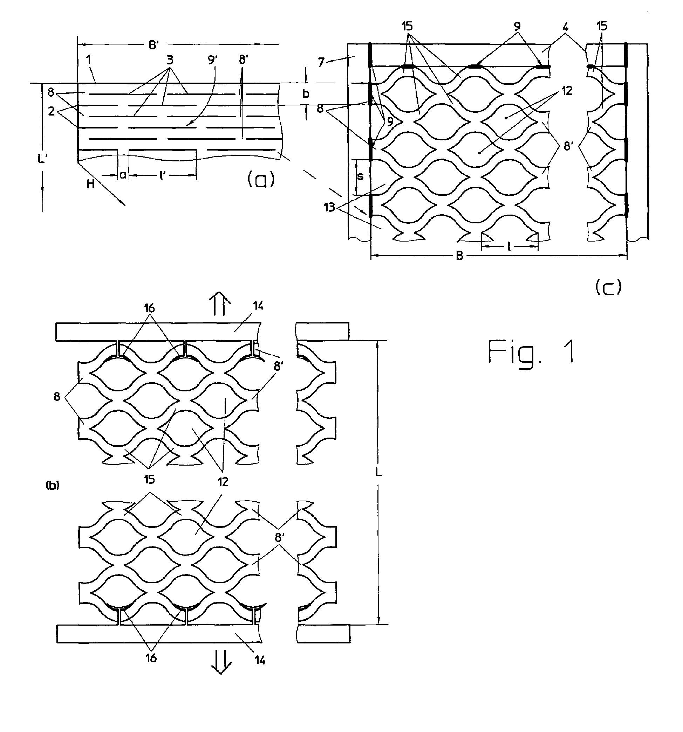

Fig. 1 a: Längsschnitt durch einen Teil eines Ausgangsblock 1 mit der Länge L', Breite B' und Höhe H und mit vorgeschnittenen, transversalen Schlitzen 2 und 3.
Fig. 1 b: Rechen 14 mit Zinken 16, welche in die Schlitze (3) eingreifen und den Ausgangsblock 1 der Länge L' auf die Länge L des inneren Matratzenkerns auseinander ziehen.
Fig. 1 c: Längsschnitt durch einen Teil eines Matratzenkerns mit Sinus förmigen Abstandshaltern 15, die mit Seiten - 4 und Queriegeln 7 verklebt (9', 9) sind und Schlitzaugen-Öffnungen 12 aufweisen.
Fig. 2 a: Längsschnitt durch auf einen Teil eines Ausgangsblock 1 wie in Fig. 1a.
Fig. 2b : Querschnitt durch eine Schlitz- Schneide Vorrichtung für einen Schaumstoff Ausgangsblockes 1 mit Guillotine artigen 27 oder Dreiecks förmigen 27' Messern, die durch zwei Kompressionplatten 29, 29' gleiten.
Fig. 2c: Längsschnitt durch Sinus- förmige Abstandshaltern 15, die aus einen Ausgangsblock 1 durch einen Streck- Stauch Mechanismus gewonnen werden, mit eingesetzten Tonnen-Taschenfedern 30.
Fig. 2d : Querschnitt durch eine Einsetz Vorrichtung für Taschenfedern 30 in die Öffnungen 12 der Abstandshaltern 15.
Fig. 3 a und a': Querschnitte durch einen Ausgangsblock 11 mit Kamm artig geschnittenen Schlitzen 2 mit verschiedenen Abständen.
Fig 3b und b' : Querschnitt durch einen Matratzenkerns mit V-förmigen Abstandshaltern 5 und 5' in aufrecht gestellten Reihen, die zwischen einer Deck-10 und einer Boden-10' Schaumstoff Platte geklebt (9) sind: undeformiert (b) und deformiert (b').

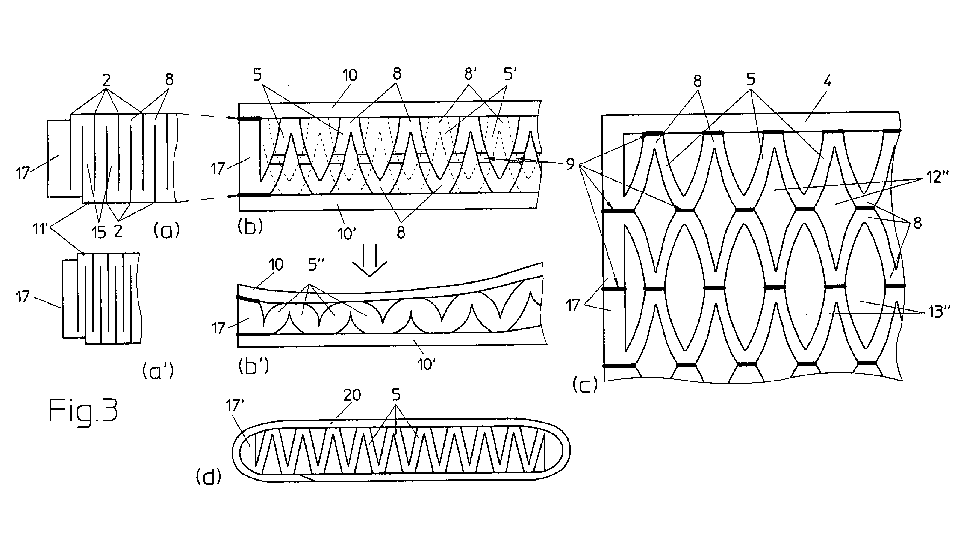

Fig. 3 c: Draufsicht auf einen Matratzenkern mit verbunden V- förmigen Abstandshalter 5 Reihen.
Fig. 3 d: Querschnitt durch ein Kissen mit V-förmigen Abstandshaltern 5 in einer Schaumstoff- Umhüllung 20.

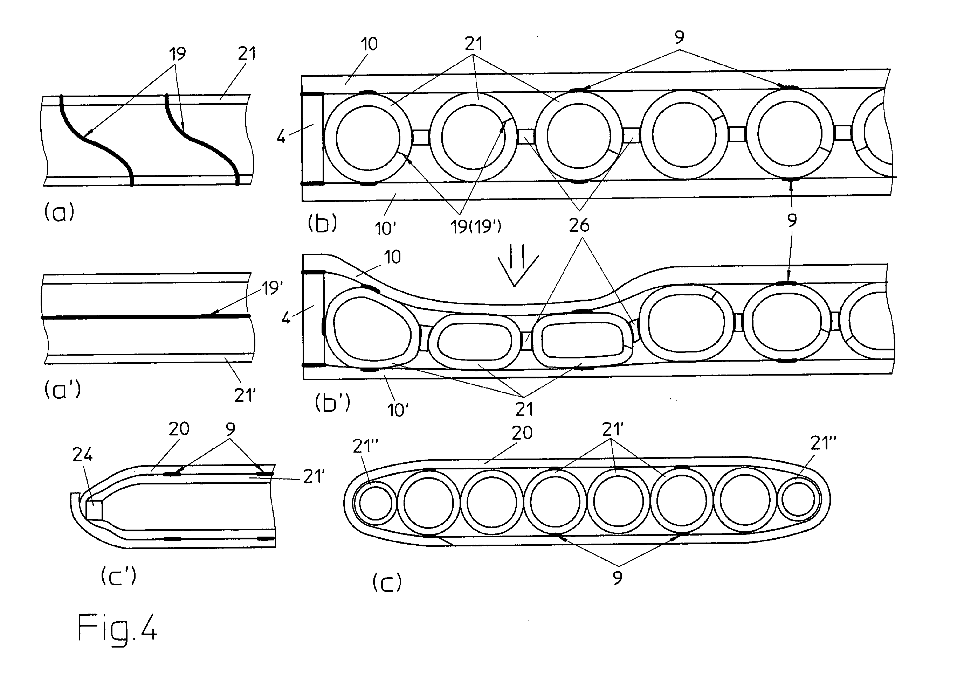

Fig. 4a und a': Längsschnitt durch Hohlzylinder 21, 21' geformt durch spiral- artiges bzw. Längsrollen von Schaumstoff Streifen, die an den Berührungskanten zusammengeklebt (19,19') sind.
Fig. 4b und b': Querschnitt durch Matratzenkerne mit hohlzylindrischen Abstandshaltern 21, die durch Schaumstoff Brücken 26 verbunden und zwischen einer Deck- 10 und einer Boden-10' Platte angeordnet sind: undeformiert (b) und deformiert (b').
Fig. 4c und c': Quer- und Längsschnitt durch ein Kissen gefüllt mit hohlzylindrischen Abstandshaltern 21', 21" zwischen einer Umhüllung 20 aus Schaumstoff Material.

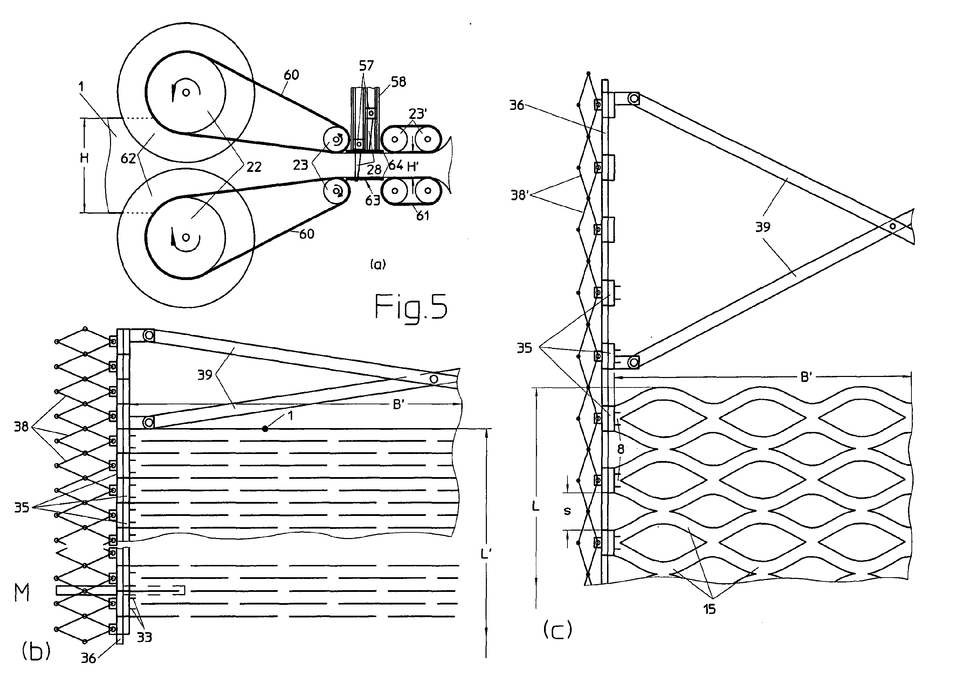

Fig. 5a : Querschnitt durch eine Schlitzschneide Vorrichtung mit zwei getakteten Messer 28 Reihen und je einem Paar unterschiedlich großer Walzen 22, 23, über die je ein Treibriemen 60 läuft, zum Komprimieren und zum Transport eines Schaumstoff Ausgangsblockes 1.
Fig. 5b: Längsschnitt durch auf eine synchrone Streck-Stauch Vorrichtung zwischen der ein vorgeschnittener, kompakter Schaumstoff Ausgangsblock 1 liegt.
Fig. 5c : Längsschnitt durch eine synchrone Streck - Stauch Vorrichtung, die einen inneren Matratzenkern mit Sinus - förmigen Abstandshaltern 15 aus einem auseinandergezogenen Ausgangsblock 1 entwickelt.

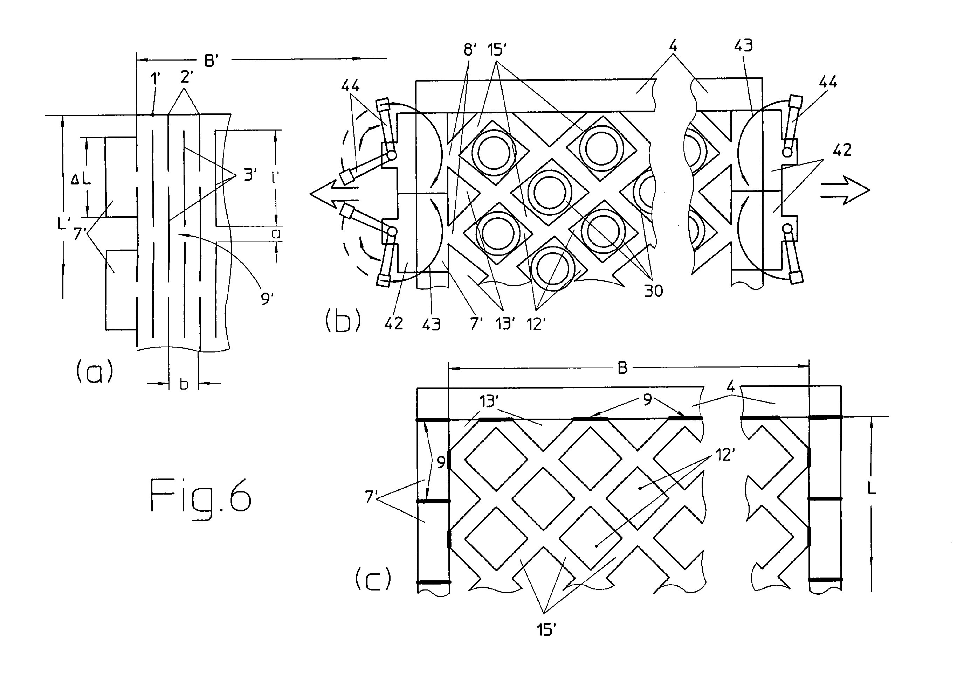

Fig. 6a : Längsschnitt durch einen Teil eines Ausgangsblock 1' mit eingeschnittenen longitudinalen Schlitzen 2' und 3' und Rand- Riegelstücken 7' mit denselben Dimensions Angaben wie in Fig. 1a.
Fig. 6b : Längsschnitt durch eine Spreiz - Stauch Vorrichtung zur Formung von X-förmigen Abstandshaltern 15' mit Hilfe von Wagen 42 mit Enterhaken ähnlichen Nadeln 43 zur Fixierung., mit rhombischen Öffnungen 12' und verklebt mit Seiten- 4 und Queriegeln 4 und 7'.
Fig. 6c : Längsschnitt durch einen Matratzenkern mit X- förmigen Abstandshaltern 15'.

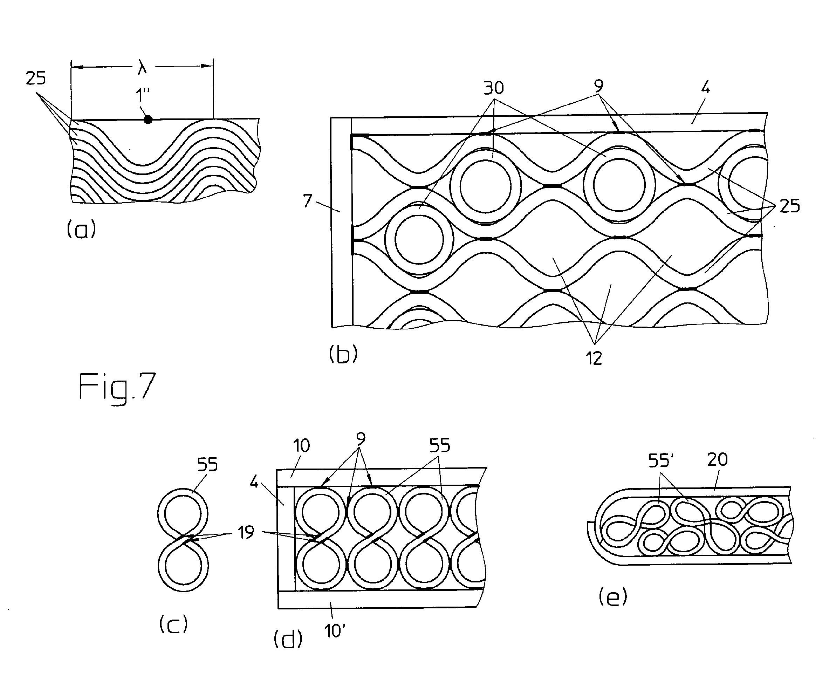

Fig. 7a Querschnitt durch Sinus-förmige Abstandshalter 25 Reihen, die aus einem Schaumstoff Ausgangsblock 1" Kontur geschnitten sind.
Fig. 7b: Draufsicht auf einen Teil eines einstöckigen Matratzenkern, gefüllt mit liegenden Reihen von Sinus-förmigen Abstandshaltern 25, die an den Extrema und zwischen Deckplatten 10 und 10' und Seiten- 4 und Querriegeln (7) verklebt sind mit teilweise eingesetzten Taschen-federn 30.
Fig. 7c und d : Querschnitt durch einen 8-förmig geformten Abstandshalter 55 und Teil eines einstöckigen Matratzenkerns, gefüllt mit aufrecht stehenden, 8-förmigen Abstandshaltern 55.
Fig. 7e : Querschnitt durch ein Kissen, gefüllt mit Lagen von 8-förmigen Abstandshaltern 55' in einer Umhüllung 20.

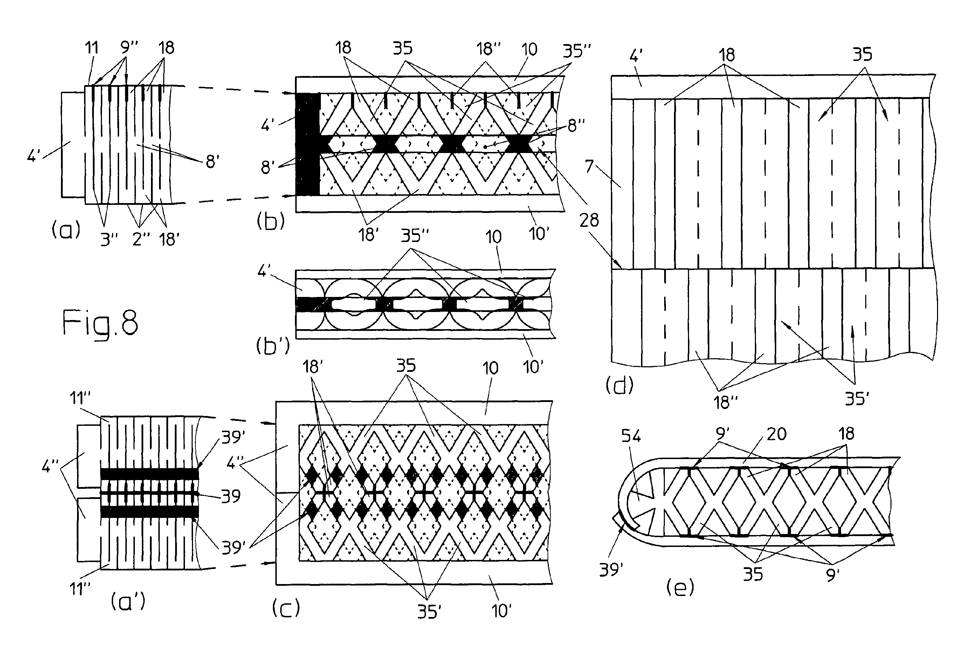

Fig. 8a und a': Querschnitte durch ein- und zweistöckigen Schaumstoff Ausgangsblöcke 11 bzw. 11", die beide mit Kamm artigen Schlitzen 2"und 3" und Randstücken 4' bzw. 4" versehen sind.
Fig. 8b und c: Querschnitte durch einen ein- bzw. zweistöckigen Matratzenkern, gefüllt mit liegenden, versetzten Reihen von X-förmigen Abstandshaltern 35 und 35': undeformiert (b) und deformiert (b').
Fig. 8d : Draufsicht auf einen einstöckigen Matratzenkern, gefüllt mit liegenden, versetzten Reihen von X-förmigen Abstandshaltern 35 und 35'.
Fig. 8e : Querschnitt durch ein Kissen gefüllt mit einer Reihe von aufrecht stehenden X-förmigen Abstandshaltern 35.

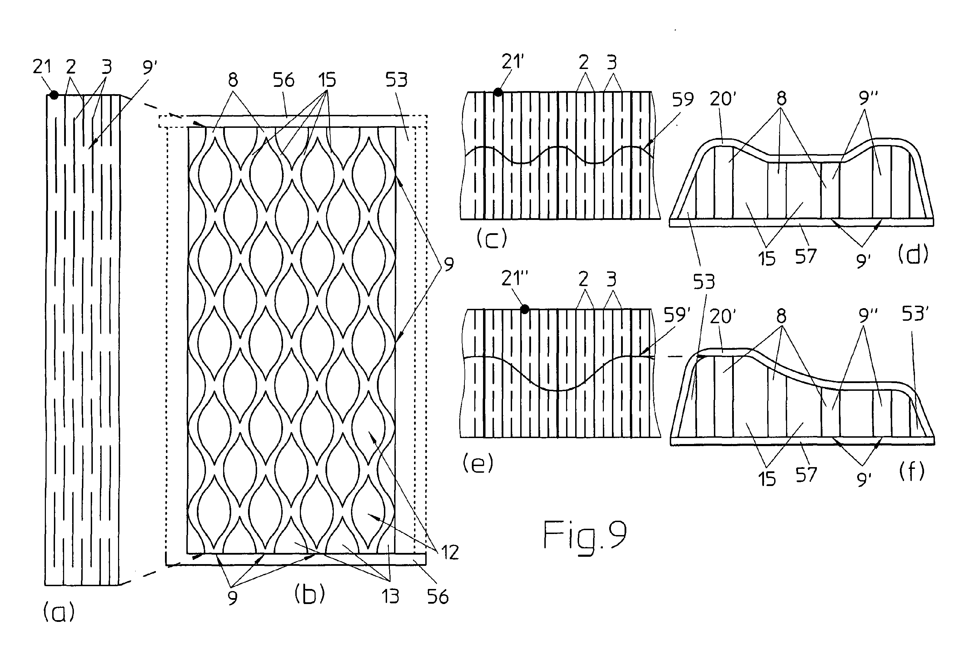

Fig. 9a, c und e : Längs- und Querschnitte durch geschlitzte (2, 3) und Kontur geschnittene Schaumstoff Ausgangsblöcke 21, 21' und 21".
Fig. 9b : Längsschnitt durch ein Kissen, gefüllt stehenden, verbundenen Sinus - förmigen Abstandshaltern 15.
Fig. 9d und f : Querschnitte durch zwei Kissen, gefüllt mit liegenden Sinus-förmigen Abstandshaltern 15 in einer Knochen- und einer Keilform mit dünnen Bodenplatten 57 und Umhüllungen 20' aus Schaumstoff.

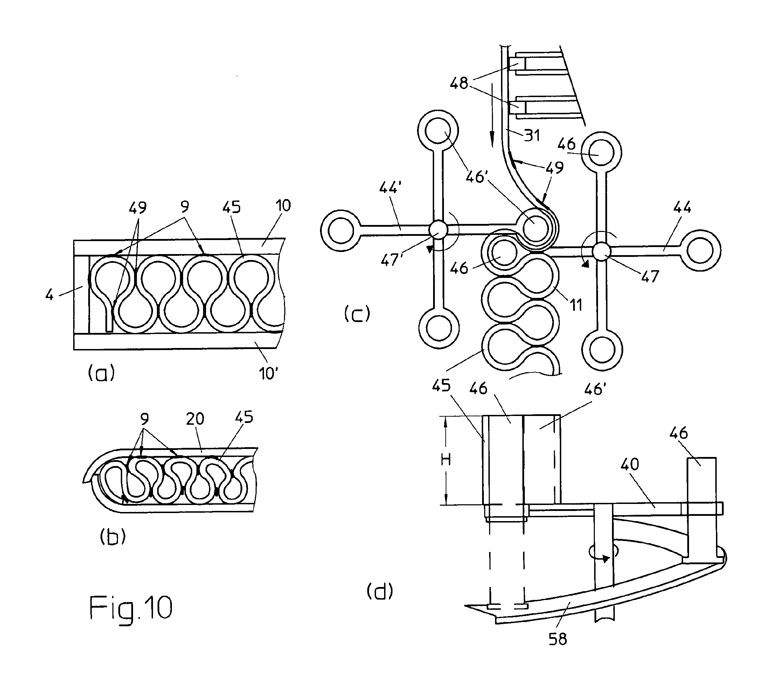

Fig. 10 a : Querschnitt durch Teil eines Matratzenkerns, gefüllt mit liegenden Mäanderband Abstandshaltern 45.
Fig. 10b : Querschnitt durch ein Kissen gefüllt mit Mäanderband Abstandshaltern 45.
Fig. 10c und d : Draufsicht auf und Querschnitt durch eine kontinuierliche Formvorrichtung für die Mäanderband Abstandshaltern 45.

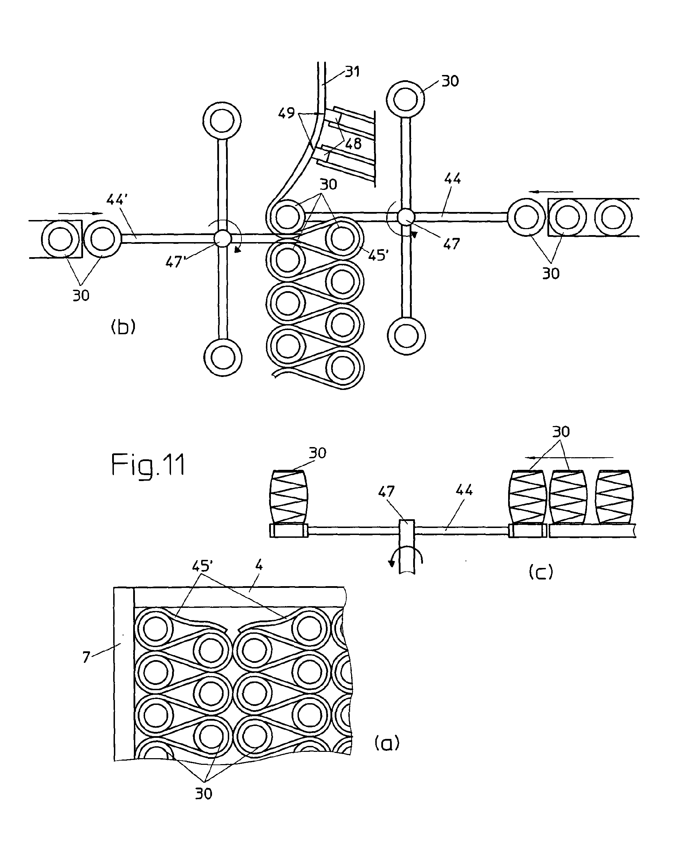

Fig. 11a : Längsschnitt durch einen Teil eines Matratzenkerns, mit stehenden Mäanderband Abstandshaltern 45' gefüllt mit Taschenfedern 30.
Fig. 11b und c : Längs- und Querschnitt durch eine kontinuierlich arbeitende Taschenfeder-Einsetz Vorrichtung mit gleichzeitiger Formung der Mäanderband Abstandshalter 45'.

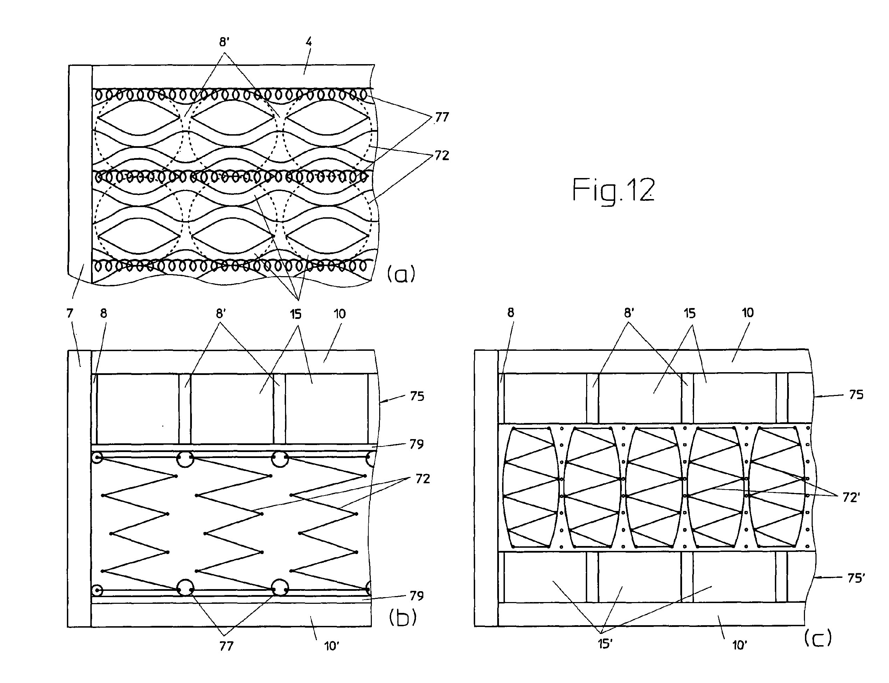

Fig. 12a und b : Längs- und Querschnitt durch einen Matratzenkern, bestehend aus einem Stockwerk aus Bonnell-Federn 72 und einem Topper 75 aus Sinus-förmigen Abstandshaltern 15 zwischen einer Deck-10 und Bodenplatte 10'.
Fig. 12c : Querschnitt durch einen Matratzenkern aus einem Taschenfeder- 72' Mittelteil mit je einem Top- 75 und Boden- 75' Topper aus Sinus-förmigen Abstandshaltern 15.

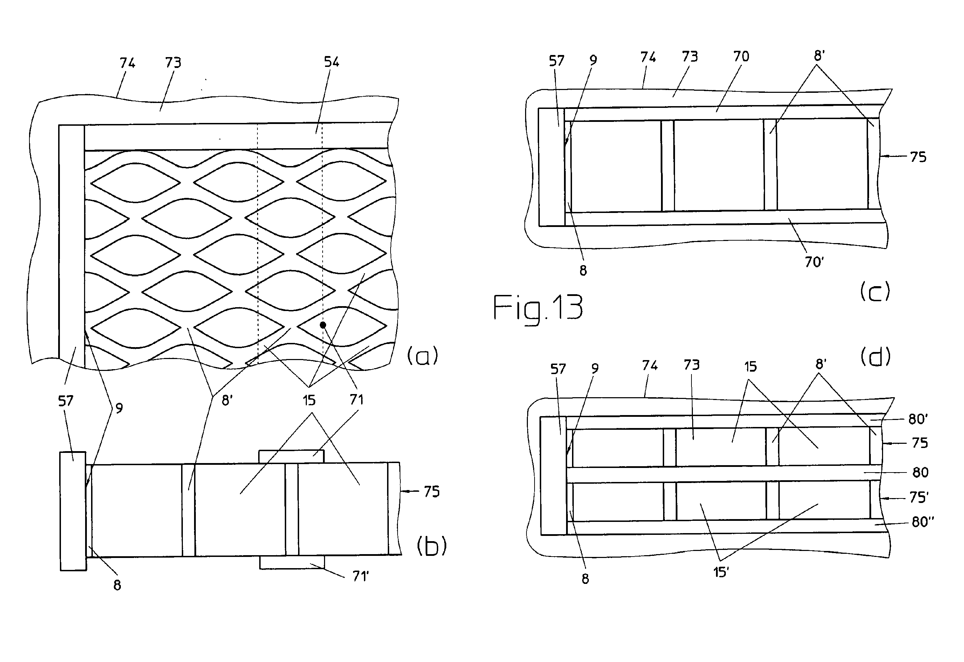

Fig. 13a und b : Draufsicht auf und Querschnitt durch einen inneren Dämpfungskern für ein Wasserbett, bestehend aus Sinus-förmigen Abstandshaltern 15, verklebt zwischen oberen - 71 1 unteren 71' Streifen aus Schaumstoff.
Fig. 13c : Querschnitt durch dito, mit den Abstandshaltern 15 verklebt zwischen einer Deck-70 und Boden- 70' Platte aus Schaumstoff.
Fig. 13d : Querschnitt durch einen inneren Dämpfungskern für ein Wasserbett, bestehend aus einer zweistöckigen Abstandshalter 15 Konfiguration 75, 75', die zwischen drei Schaumstoff- Platten 80' , 80, 80" geklebt ist.

### Figurenbeschreibung

Die Figuren 1 bis 13 illustrieren verschiedene geometrische Form Varianten der Schaumstoff Abstandshalter, die in Matratzenkernen, Polsterungen und Kissen eingesetzt werden können. Die X- und V- und die Sinus-förmigen Abstandshalter können aus geschlitzten Schaumstoff Ausgangsblöcken entwickelt werden durch Streck- bzw. Spreiz- Stauch Vorrichtungen, die ebenfalls schematisch skizziert werden.

Alle Formen der Abstandshalter, X-, V-, 8-, Sinus- und Hohlzylinder förmigen oder Mäanderband artigen können in Matratzenkernen und Kissen verwendet werden, vertikal aufrecht stehend oder in horizontal verlaufenden Reihen. Diese Varianten sind in allen gezeigten Figuren austauschbar.

Neben den einstöckigen Konfigurationen sind für die meisten Abstandshalter auch zwei- oder mehrstöckige Versionen möglich, wodurch leicht Matratzenkem Höhen von mehr als 30 cm erreicht werden.

Das Einsetzen von Taschenfedern, freien Spiralfedern oder Mittelringen in die Öffnungen der Abstandshalter eröffnet weitere essentielle Freiheitsgrade für die Elastizität - und die Zonenvariation der Matratzenkerne.

Die gezeigten Konfigurationen und Anwendungen für Matratzenkerne und/oder Kissen sind nur repräsentative Beispiele mit vielen weiteren möglichen Ausführungen.

Fig. 1 a zeigt den Längsschnitt durch einen Schaumstoff Ausgangsblock 1 der Breite B' und Länge L' , der mit alternierenden Reihen von transversalen Schlitzen 2 und 3 versehen ist, die parallel zu seiner Breite B' verlaufen und über die Höhe H durchgehen, wobei die Schlitze 3 eine Länge **l'** und vom Rand und untereinander ein Abstandsstück 8 bzw. 8' der Länge **a** aufweisen. Jede Reihe ist zur nächsten um (**l' + a**) /**2** versetzt, so daß jede zweite Reihe bis zum Blockrand offen geschlitzt (2) ist.

Um den Matratzen Innenkern in Fig. 1c zu erhalten, wird der geschlitzte Schaumstoffblock 1 in der Breite von B' auf B gestaucht und gleichzeitig von der Länge L' auf die gewünschte Länge L des Innenkerns und gestreckt.

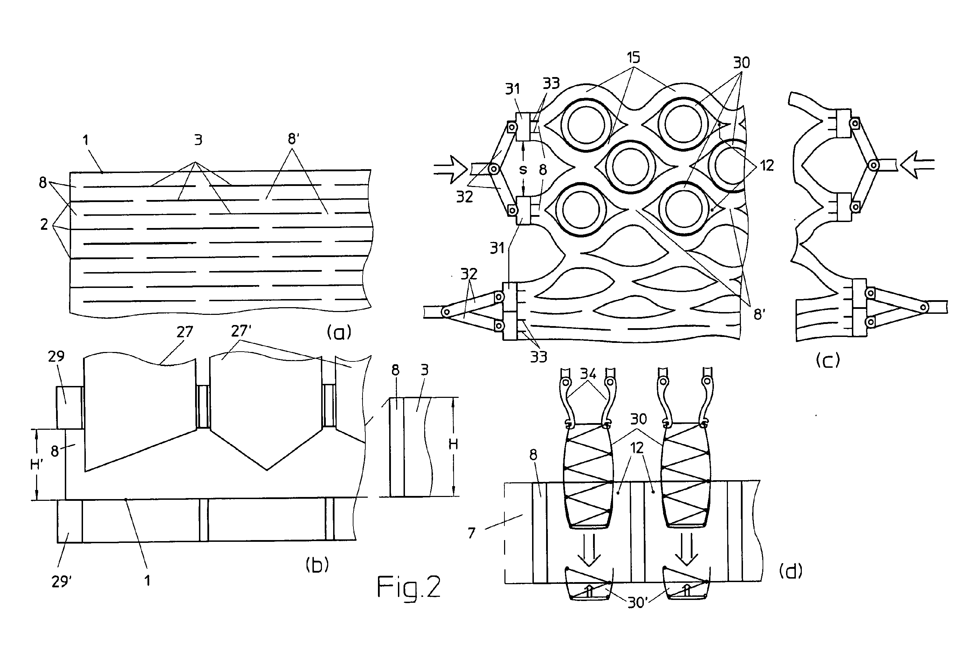

In den Schaumstoff Ausgangsblock 1 werden durch eine Schneide Vorrichtung, siehe z. B. Fig. 2b oder 5a, transversale, durch den Block 1 gehende Schlitze 2, 3 in versetzten Reihen so eingebracht, dass eine Schlitz 2 Reihe zur Seite hin offen und die andere 3 Reihe ein geschlossenes Endstück 8 aufweisen, und der geschnittene Block 1 oben und an den Längsseiten mit Klebstoff 9', 9 berollt oder bespritzt wird.

In Fig. 1b greift je ein Rechen 14 mit Zinken 16 in die erste und letzte Reihe von Schlitzen 3 ein zieht und den Ausgangsblock 1 auf die Länge L des inneren Matratzenkerns auseinander, wobei die zusammenhängende Sinus artige Struktur von aufrecht stehenden Rippen 15 entsteht.

Dann werden Seiten - 7 und Querriegel 4 und eine Deckplatte 10 aus Schaumstoff an und auf diesen inneren Matratzenkern angedrückt und verklebt werden.

Nach dem Wenden dieser Voreinheit werden die Nulldurchgänge der Sinus artigen Rippen 15 und die Seiten - 7 und Querriegel 4 mit Klebstoff 9', 9 punkt - oder streifenweise belegt und dann die Bodenplatte 10' aufgelegt und angepresst.

Insbesondere bei der Verwendung von Zonen mit unterschiedlichen Abständen zwischen den Schlitzreihen 2, 3 kann beim Auseinanderziehen eine Taillienbildung auftreten, die zu einer nicht überall bündigen Verklebung (9') an den Seitenriegeln 4 führt. Das kann jedoch wegen der bündigen Verklebung mit den Deckplatten 10, 10' plus Seitenriegeln 4,7 hingenommen werden. Die Taillienbildung wird durch die synchrone Streck -Stauch Vorrichtung von Fig. 5a vermieden.

Durch die Streck - Stauchung entstehen aus den Schlitzen mit Anfangslängen **1'** Schlitzaugen förmige Öffnungen der Längenausdehnung 1 und des Innenumfanges **21'.**

Es entstehen jeweils stehend angeordnete Sinuswellen förmige Abstandshalter 15 der Breite **b/2,** siehe Fig. 1c, die an Maxima und Minima an den Schlitz Abstandsstücken 8' von der Länge a miteinander verbunden sind. Die Randendstücke 8 der Breite b der zusammenhängenden Sinuswellen Abstandshalter 15 sind dann um die Strecke s auseinander gestreckt, siehe Fig. 1c.

Eine weitere solche mechanische Vorrichtung, weldche die Streck -Stauchung automatisch und synchron vollzieht, ist in Fig. 5b und c dargestellt.

Für das Schneiden der Schlitze 2 und 3 in einen Schaumstoff Ausgangs -Block 1 kann auch sehr rationell ein dünner, reiner Hochdruck (2000 bis 4000 bar) Wasserstrahl eingesetzt werden, ggf. auch eine mehrköpfige Apparatur mit zwei bis vier Wasserstrahlen.

Um das Rücksprühen der Wasserstrahlen zu vermeiden, muß der Ausgangs -Block 1 auf einen Wabengitter aus dünnen (Rasier-) Klingen, z.B. aus Edelstahl befestigt sein.

In Fig. 2b ist eine weitere Schneide Apparatur für die Schlitze 2, 3 (2', 3') in den Schaumstoff Blöcken 1 (1'), Fig. 1a, b und 2a, im Querschnitt schematisch dargestellt. Sie besteht aus zwei Kompressions Platten 29', 29 , welche den Schaumstoffblock 1 (1') von seiner Einbauhöhe H auf H' ≈ 3H/4 bis 2H/3 zusammenpressen, um ein sicheres Durchschneiden ohne seitliches Ausweichen zu gewährleisten. In diese Kompressions Platten 29', 29 sind mehrere Reihen Guillotine artige 27 oder dreieckig angespitzte 27' Messer eingelassen, welche in den entsprechend gechlitzten Auflageplatten 29', 29 durchfahren können. Dieses rationelle, schnelle und preiswerte, mehrreihige Durchschneiden (-stanzen) eines Schaumstoffblockes 1 erspart die Verklebungen im Innenkern der Matratze.

Mit den automatisierbaren Streck- Stauch (Fig. 1b und 5b, c) und der Spreiz- Stauch-Vorrichtung (Fig. 2c) läßt sich eine sehr rationelle Herstellung des Innenkerns der Matratze erreichen, insbesondere auch wegen der Rollen- oder Spritzauftragung des Klebstoffes 9', 9 auf den geschlitzten Anfangs- Blockes 1 (1') zur festen Verbindung der Abstandsträger 15, 15' mit der Deck- 10 bzw. Bodenplatte (10') des Matratzenkerns.

Die Verklebung der oberen Schaumstoff Deckplatte (10) kann ggf. nur an den Abstands- 8' und den Endstücken 8 sowie den Seitenwangen 4, 7 erfolgen.

Auch die Verpackung / der Transport der geschnittenen Schaumstoffblöcke 1, 1' ist sehr rationell möglich, durch eine inherente Kompression um Faktoren 2,5 bis 3 mit einer weiter möglichen Verpackungs Kompression um bis zu einen Faktor acht. Auch eine Roll-Verpackung des konfektionierten Matratzenkerns ist möglich.

Die Spreiz- Stauch - Apparatur ist schematisch in Fig. 2c dargestellt. Dabei werden je zwei Wagen 31, die mit einer Spreiz- Schere 32 verbunden sind, mit Nadeln 33 in den Abstandsstücken 8 der entstehenden Sinuswellen Abstandsträger 15 eingesteckt und um die Spreizstrecke s auseinander gefahren und gleichzietig von der Breite B' auf die Innenkernbreite B gestaucht. Eine Zwangssynchronisation kann anlog zu der Streck - Stauch Vorrichtung von Fig. 5b und c mit mindestens je zwei einpaarigen großen Nürnberger Scheren (39, 39') an beiden Enden des Matratzenkerns erfolgen.

In die Schlitzaugen Öffnungen der Abstandsträger 15 sind in Fig. 2c Tonnen förmige Taschenfedern 30 eingesetzt, zur deutlichen Erhöhung der Rückstellung der Schaumstoff Abstandsträger 15.

Dies eröffnet neue Freiheitsgrade zur Zonen Ausgestaltung des Matratzenkerns.

In Fig. 2d ist schematisch die Einsetz Vorrichtung für Taschenfedern 30, gehalten mit Greifzangen 34, in die Abstandsträger-15 Öffnungen 12 dargestellt. Vorteilhafter weise werden eine bzw. zwei Reihe(n) von Taschenfedern 30 in einem Arbeitsgang eingesetzt.

In Fig. 3 werden aufrecht stehende V-förmige Abstandshalter gezeigt.

In Fig. 3a und a' wird der Querschnitt durch einen geschlitzten Schaumstoff Ausgangsblock 11' mit unterschiedlichen Abständen zwischen den Schlitzen gezeigt.

Die Schlitze 2 sind Kamm artig alternierend von oben und unten in den Block 11 eingeschnitten mit einem ungeschnittenen Abstand 8 auf jeweils einer Seite und breiteren Randstücken 17 an beiden Enden. Der Ausgangsblock 11 wird dann um einen Faktor zwei bis zweieinhalb gestreckt, so daß sich daraus die aufrecht angeordneten V-förmigen Abstandshalter 15 Reihen ergeben, welche in Fig. 3b und c im Quer- und Längsschnitt gezeigt und die zwischen einer Deck- 10 und einer Bodenplatte 10' gestellt und verklebt (9) sind.

Für eine inherente Stabilisierung und/oder Zonen- Variation kann die nächste Reihe von V's, siehe Fig. 2b, gestrichelte Linien, eine Phasenverschiebung von 180 Grad zur benachbarten Reihe haben, d.h. der entsprechende Ausgangsblock 11 wird gerade um 180 Grad, auf den Kopf gestellt, verwendet.

Die zusammengeklebten (9) Rand Riegelstücke 17 ergeben den longitudinalen (transversalen) Rand. Auch die V- Abstandshalter- 15 Reihen werden durch einen mittigen KlebstoffStreifen 9 verklebt.

Fig. 3b' zeigt die Teil- Deformation einer Reihe von V's 5" unter Kompression.

In Fig. 3c ist die Draufsicht auf den Matratzenkern von Fig. 3b gezeigt.

In Fig. 3d ist der Querschnitt durch ein Kissen gezeigt mit aufrecht stehenden V- förmigen Abstandshaltern 5, die erhalten werden durch Strecken eines Ausgangsblockes 11 mit halbrunden Endstücken 17', die umgeben sind von einer Umhüllung 20 aus Kalt- oder viscoelastischen Schaumstoff oder einem Vlies- Material.

Für unterschiedliche geformte Kissen, siehe Fig. 9.

In Fig. 4 haben die Schaumstoff Abstandshalter 22 die Form eines Hohlzylinders und sind mit Schaumstoff- Brücken 26 verbunden.

In Fig. 4a und a' sind der Längsschnitt durch Hohlzylinders gezeigt, die hergestellt werden entweder durch spiralartiges (a) oder Längs- Rollen (a') eines Schaumstoff Streifens und Zusammenkleben (19,19') an den aufeinander treffenden Kanten, so daß ein Hohlzylinders entsteht.

Fig. 4b zeigt den Querschnitt durch einen Matratzenkern mit Hohlzylinder förmigen Abstandshaltern 22, die mit Schaumstoff Brücken 26 verbunden transversal (oder longitudinal) verlaufend zwischen einer Deck- 10 und einer Bodenplatte 10' und mit Seitenriegeln 4 (7) verklebt sind.

Fig. 4 b' skizziert die Deformation der Hohlzylinder Abstandshalter 22 der Fig. 4 a durch eine Teil- Kompression. Die Zylinder 21, 21' sind teilweise in Rechtecke deformiert und die Schaumstoff- Brücken 26 sind gestaucht. Unter großen Druckbelastungen werden die Hohlzylinder flach gedrückt und die Steifigkeit eines Schaumstoff Blockes wird sich allmählich einstellen, siehe oben.

Es ist auch möglich jeden, oder nur jeden zweiten oder dritten Zylinder mit den Deckplatten 10, 10' zu verkleben (9), an den Berührungsflächen oder an verschiedenen Punkten.

Wenn einige der Zylinder frei sind, kann eine Interaktion zwischen den stark und den nicht so stark komprimierten Nachbar- Zylindern stattfinden, was einem kleinen positiven Unterstützungshub ergibt. Dies wird auch bewirkt durch eine Verschiebung der verformten Zylinder, welche gefördert wird durch Einlegen eines Gewebefutters, z.B. Corovin, unter die Deckplatten 10, 10', die für ein besseres Gleiten sorgen.

In Fig. 4c und c' sind der Längs- und der Querschnitt eines Kissens gezeigt mit Hohlzylindern 21', 21" mit einem größeren Durchmesser (21') in der Mitte und kleineren (22 ") am Rande des Kissens. Wieder umgeben die Zylinder 21', 21" eine Umhüllung 20, welches sich an den Rand- Enden des Kissens verjüngen und mit einem flachen Verbindungsstück 24 aus softigen Schaumstoff verklebt sind.

Natürlich können die Hohlzylinder - und V- förmigen Abstandshalter 5 aus den Fig. 3 und 4 auch in horizontal verlaufenden Reihen liegend eingesetzt werden, jeweils an den Berührungsflächen miteinander verklebt. Durch die Zusammensetzung der Öffnungen, in die wieder zusätzliche Federelemente (30) eingesetzt werden können.

In Fig. 5 a ist eine weitere mechanische Schneidevorrichtung gezeigt, die aus je zwei Walzen 22 und 23 für je einen Treibriemen 60 von der Breite des zuschneidenen Schaumstoffblockes 1 besteht. Die beiden großen Walzen 22 haben Seitenwangen 62 größeren Durchmessers, damit der Schaumstoffblock 1 beim Einfedeln zwischen die Transportriemen 60 seine Breite beibehält, und eine Querextension bei dem Kompressionsvorgang weitgehend vermieden wird.

Die vorderen Walzen 22 haben z.B. einen Durchmesser von etwa H, mit H = Höhe des Schaumstoffblockes 1, und die kleineren Walzen von H', der gewünschten, komprimierten Höhe H' des Blockes 1. Das angestrebte Verhältnis H / H' kann sich zwischen drei und etwa fünf bewegen.

Der Treibriemen 60 um jeweils die beiden Walzen 22 und 23 transportiert und komprimiert den Block 1 in einem Arbeitsgang direkt zwischen zwei geschlitzte, ggf. mit Teflon belegte Leitbleche 64. In den Schlitzen 63 stechen zwei Messer 28 Reihen getaktet durch den komprimierten Block 1. Die Messer 28 Reihen laufen mit Gleitführungen 57 in den passenden Gleitschienen 58.

Die Transport Geschwindigkeit des komprimierten Blockes 1 und die Taktung der Messer 28 sind so synchronisiert, dass das gewünschte Schnittmuster, z.B. das von Fig. 5 b.

Die Durchstech - und Rückzugsbewegung der Messer 28 Reihen erfolgt vorteilhafter weise hydraulisch.

Ggf. erfassen je zwei kleine, mit Treibriemen 61 verbundene Walzen 23', welche mit der selben Winkelgeschwindigkeit wie die Walzen 23 gleichen Durchmessers vor dem Gleitblechen 64 rotieren, den komprimierten, geschnittenen Block 1 direkt hinter den Gleitblechen 64 und verhindern so eine Stauchung in Schnittrichtung.

Durch Änderung des Abstandes zwischen den Messern 28 in den beiden Reihen und der Taktfrequenz kann das Schnittmuster nach Wunsch geändert werden.

Die Treibriemen 60, 61 haben eine raue Oberfläche, damit der zu komprimierende Block 1 mit der Geschwindigkeit des Riemens ohne Schlupf transportiert wird.

Die mechanische, kontinuierlich arbeitende Schneidemaschine ist eine preiswerte Alternative zu dem Hochdruck Wasserstrahl Schneiden und ist für eine Massenproduktion vorgesehen. In Fig. 5b und c sind der Längsschnitt durch eine synchrone Streck - Stauch Vorrichtung gezeigt, welche in der Lage ist, den geschlitzten (2, 3) Schaumstoff Ausgangs- Block 1 der Breite B' und Länge L' in die gestreckten Sinus- förmigen Abstandshalter 15 mit einer Breite B und Länge L des inneren Matratzenkerns ohne jede Taillienbildung umzusetzen. Dieser Streck - Stauch Prozess wird mit Hilfe von Gleitwagen 35, die auf Schienen 36 auf beiden Seiten des Blockes 1 laufen.

Diese Wagen 35 sind z. B. mit Nadeln 33 an den Endstücken 8 der Abstandshalter 15 fixiert und sind verbunden mit einer vielgliedrigen Nürnberger- Scheren- 38 Vorrichtung, welche die gewogene Streckung der Endstücke 8 in den gewünschten Abstand s vornimmt, indem die Wagen 35 auf Schienen 36 auseinander gleiten und so die Block-1 Länge L' auf die Länge L des inneren Matratzenkerns auseinander ziehen.

Die synchron entsprechende Stauchung der Breite B' auf B wird von zwei großen Nürnberger- Scheren Paaren 39 an beiden Enden des Blockes 1 bewirkt, welche ebenfalls mit den Wagen 35 in den beiden Seitenschienen 36 verbunden sind. Dabei wird die Anfangs - Spreizung und die Länge der Nürnberger Schere 39 so gewählt, daß das gewünschte Streck - Stauch Verhältnis erhalten wird.

Vorteilhafterweise wird die Vielglieder Nürnberger Schere 38 in der Mitte (M) arretiert.

Der Tisch, auf dem die Abstandshalter 15 gleiten ist mit Teflon beschichtet oder mit einem Gleitgewebe bedeckt, welches die Bewegung nicht behindert und / oder die Reibung wird reduziert durch eingefräste Rillen mit kleiner Spitzenoberfläche.

Oder der gesamte Streck - Stauch Vorgang wird mit einer senkrecht stehenden Vorrichtung ausgeführt.

In Fig. 6c ist der Längsschnitt durch einen Schaumstoff Ausgangsblock 1' gezeigt, der in gleicher Weise wie in Fig. 1a, aber hier longitudinal geschlitzt und mit der entsprechend gestrichelten Numerierung versehen ist. Dieser Block 1' wird einer Stauch - Spreizung von L' -> L sowie B' -> B, siehe Fig. 1c, unterworfen, sodass aus den Schlitzen der Länge I' Rautenförmige Abstandshalter 15' der Dicke **b/2** mit Öffnungen eines Innenumfanges 21' entstehen.

Dies erspart Verklebungen im Inneren des Matratzenkerns.

Diese Ausgangs- Blöcke 1, 1' (11, 11') können aus Schaumstoff Teilbereichen mit unterschiedlichem(r) Raumgewicht und Stauchhärte bestehen, die durch Verklebung zusammengesetzt sind.

Die Verklebung der X- förmigen- Abstandsträger 15' mit der Bodenplatte (10') und den Seiten - Riegeln 4,7' , siehe Fig. 6c, erfolgt analog dem Vorgehen in der Beschreibung zu

Fig. 1c, wobei die Längsseiten Riegel mit der Gesamtlänge L aus den einzelnen Riegel - Stücken 7' der Länge ΔL durch Verklebungen 9 zusammengesetzt sind.

In Fig. 6b ist der Längsschnitt durch eine Spreiz- Vorrichtung skizziert, welche die X-förmigen Abstandshalter 15' aus einem logitudinal geschlitzten (2', 3') Ausgangsblock 1, siehe Fig. 6a, entwickelt.

Dazu werden Wagen 42 mit Enterhaken- artige Nadeln 43 in die Randstücke 7'mit einem rotierenden Arm - 44 Mechanismus eingeführt. Die festgehackten Wagen 42 werden nach außen gezogen und transformieren so den geschlitzten Block 1' in die X-förmigen Abstandshalter 15'.

Die synchronisierte Bewegung der Randstücke 7' und das Spreizen des X- Abstandshalter-15' Musters wird bewerkstelligt durch eine Vielglieder Nürnberger Schere (nicht gezeichnet), die mit den Wagen 42 verbunden sind, wobei die Länge der Scheren- Glieder auf die benötigte Spreiz- Bewegung abgestimmt ist, vergleiche Fig. 5b und c.

In die rhombischen Öffnungen 12' der X's können Taschenfedern 30, freie Spiralfedern oder Mittelringe eingesetzt werden.

Das Füllmuster kann natürlich variiert werden: von allen Öffnungen 12 (12') belegt, bis zu jeder zweiten, dritten, etc. gefüllt, auch mit jedem anderen denkbaren Muster.

Für eine Stabilisierung der Ränder des Matratzenkerns können auch in die dreieckigen Öffnungen 13' (wie auch in die Spitzbogen förmigen Öffnungen 13 der Sinus-förmigen Abstandshalter 15) in jeder oder jeder zweiten Öffnung 13' Taschenfedern 30 mit verschiedenen Windungsdurchmessern (nicht gezeichnet) eingesetzt werden.

In Fig. 7 sind weitere Abstandshalter Varianten skizziert.

In Fig. 7a sind Sinus- förmige Abstandshalter 25 aus einem Schaumstoffblock 1" mit einer Standard Kontur -Schneide Maschine ausgeschnitten.

In Fig. 7b und c ist der Längsschnitt durch einen ein- und zweistöckigen Matratzenkern gezeigt, indem diese Sinus- förmigen Abstandshalter- 25 Reihen liegend angeordnet sind und jeweils an den Extrema miteinander und an den Berührungsflächen mit den Seitenriegeln 7 und 4 verklebt (9) sind. Ebenso sind an den Stirnflächen der Abstandshalter 25 Deckplatten (10, 10') ggf punktuell verklebt.

Durch Aufrechtstellen der Sinuswellen kann eine Konfiguration erzeugt werden, welche denen in Fig. 1b, 2c und 5c entspricht , mit zusätzlichen Klebestellen (9) zwischen den Extrema.

Es ist hier auch möglich, die Extrema der Abstandshalter 25 nur in Teilen der Höhe, etwa in der Mitte oder im oberen oder unteren Teil zu verkleben. Dies ergibt eine weitere Variation der Elastizität der Abstandshalter 25 Rippen, insbesondere wenn auch Taschenfedern (30) in die Schlitzaugen- Öffnungen 12 der Sinus- förmigen Abstandshalter 25 eingesetzt werden, wie hier in den Randreihen gezeigt.

Diese Abstandshalter 25 Reihen haben dann eine Höhe von λ/ 2 bis λ, mit λ = Wellenlänge der Sinuswelle.

In Fig. 7c wird der Querschnitt durch einen 8- förmigen Abstandshalter 55 gezeigt, welche durch Formen einer 8 aus einem Schaumstoff- Streifen und durch Verkleben (19) an den Berührungsflächen entsteht. Diese 8 - förmigen Abstandshalter 55 sind im Querschnitt in Fig. 7d stehend aufgereiht gezeigt, zwischen Deckplatten 10 10' und mit diesen und untereinander an den Berührungsflächen, ggf. punktweise verklebt.

In Fig. 7f ist der Querschnitt eines Kissens gezeigt, das gefüllt ist mit 8 - förmigen Abstandshaltern 55, liegend geschichtet zwischen einer Umhüllung 20 aus Schaumstoff oder Vlies Material. Die Lagen der 8' en können in verschiedener Weise zur Füllung des Kissens angeordnet sein.

In Fig. 8b, c und d sind Querschnitte durch und eine Draufsicht auf ein- und zweistöckige Matratzenkerne gezeigt mit liegenden X- förmigen Abstandshalter 35 und 35', welche durch Spreizung der geschlitzten (2", 3") Schaumstoff Ausgangs- Blöcke 11 bzw. 11", siehe Fig. 8 a und a', gewonnen werden.

In dem Block 11 (11') in Fig. 8 a (a') sind Schlitze 3"geschnitten, die fast durch die Höhe H verlaufen mit ungeschnittenen Endstücken 18', sowie Schlitze 2" von beiden Seiten mit ungeschnittenen Abständen 8' in der Mitte. Die Schlitze 3" werden an den offen Enden auf einer Länge zusammen geklebt, so dass diese wieder Endstücke 18 der gleichen Länge wie auf der nicht durchgeschnittenen anderen Seite ergeben.

Dieser Block 11 (11") wird dann auseinander gezogen, um die X- förmigen Abstandshalter 35, 35' zu erhalten, welche zwischen Deckplatten 10,10' an den Endstücken 18, 18' zur Fixierung verklebt werden.

Fig. 8e zeigt im Querschnitt ein Kissen, dessen Umhüllung 20 mit liegenden X- Abstandshaltern 35 mit einem Halbkreuz 54 als Endabschluß.

Die Schaumstoff Umhüllung 20 ist am überlappenden Endstreifen zusammen geklebt (39') und die X- Abstandshalter 35 sind punktweise (9') an die Umhüllung geklebt.

Fig. 9a, b und f zeigen die Draufsicht auf und die Querschnitte durch drei Kissen Konfigurationen mit unterschiedlicher Form, die entwickelt wurden aus geschlitzten (2, 3) und Kontur- geschnittenen Schaumstoff Ausgangs- Blöcken 21,21' und 21".

Diese Ausgangsblöcke 21,21',21", siehe Fig. 9a, c und e, werden durch Streck- Stauch Vorrichtungen, wie sie in Fig. 1b und 5b und c skizziert ist, in die Sinus- förmigen Abstandshalter 15 mit zwei Keil förmigen Enden 53,53' auseinander gezogen , welche quer in den Kissen verlaufen, deren Draufsicht in Fig. 9b gezeichnet ist.

Die gestreckten Sinus- förmigen Abstandshalter 15 sind auf einer Seite fixiert durch Verkleben auf einer dünnen Bodenlage 57 aus Schaumstoff siehe Fig. 9d und f, wobei der Klebstoff 9' schon vor der Streckung auf den Ausgangs- Block 21 vor der Streckung aufgetragen wird.

Eine obere Umhüllung 20' wird dann ggf. punktweise auf die Abstandshalter 15 geklebt. Schaumstoff Seitenteile 56 mit Verklebungen 9" vervollständigen das Kissen.

Die Umhüllung 20' kann bestehen aus Kalt-, Latex- Schaumstoffen oder aus einem künstlichen Vliesmaterial mit jeweils einer Wandstärke von ein bis drei cm. Die Anpassungsund die elastischen Eigenschaften dieser Kissen sind mindestens vergleichbar mit Kissen aus gestifteten Latex oder Kalt- Schaumkernen.

Die excellente Ventilation und Transpiration und der Pumpeffekt aufgrund der Vielzahl von Kammer- Öffnungen 12, 13 ergeben ein ideales Kissen für ein gesundes Schlafklima im Bett. Die äußere Form der Kissen kann varieren zwischen einer Knochen- (Fig. 9d), einer Keilform (Fig. 9f) oder einer flachen Version (Fig. 9b), die alle aus den Ausgangsblöcken 21, 21' und 21" gewonnen werden können, durch Kontur Schneiden entlang der Linien 59, 59' in den Flächen der Fig. 9c und e, mit keinen oder nur geringfügigen Verschnitt Verlusten.

Für eine Variation der Stauch- Elastizität können z.B. die äußere Doppelreihe von Sinus-förmigen Abstandshalter 15 aus Schaumstoff mit unterschiedlichem Raumgewicht, Stauchhärte oder Rippen- Breite bestehen als die innere Doppelreihe, siehe Fig. 9c und e.

In Fig. 10c und d ist die Draufsicht auf und der Querschnitt durch eine automatische FormVorrichtung skizziert für ein Mäanderband von Abstandshalter 45.

Dieses Mäanderband läuft in Fig. 10 a in einem Matratzenkern zwischen Deck- Platten 10, 10' und den Seiten- Riegeln 4 (7) als Rahmen (oder in einen Kissen zwischen einer Umhüllung, Fig. 10b) mit denen es jeweils vorteilhafter weise punkt weise verklebt ist. Natürlich können diese Mäanderband Abstandshalter 45 auch stehend, siehe Fig. 11a, angeordnet sein, ähnlich den Versionen mit Sinus- 15 und X- förmigen 15' Abstandshalter in Fig. 1, 5 oder 6.

Die Formvorrichtung für die Mäanderband Abstandshalter 45 in Fig. 10c und d besteht aus zwei Zahnrad ähnlich interagierenden Kreuzen mit Achsen 47,47' , welche synchron im Uhr- bzw. Gegen - Uhrzeiger Sinn rotieren und die an jedem Kreuzarm- 44, 44' Ende Formpfosten 46, 46' aufweisen, welche senkrecht zu der Kreuzebene nach oben stehen.

Ein Schaumstoffstreifen 31 mit der Breite / Höhe H wird in die rotierenden Zahnrad- Kreuze gefüttert und in das Mäanderband 45 geformt.

Klebstoff 49 Streifen werden auf das Band 31 mittels Rollen 48, die unter festgelegtem Winkel zum sich bewegenden Band 31 so rollen, daß die Bewegung jeweils einen senkrechten Klebstoff 49 Streifen ergibt.

Nachdem die Hohlzylinder in dem Mäanderband 45 ausgeformt sind, werden die Formpfosten 46, 46' an den Kreuzarm- 44, 44' Enden ausgeklingt und fallen bzw. werden durch einen Feder- Mechanismus auf ein Band 58 gestoßen. Dieses Band 58 ist unter jedem Kreuz in einer Schneckenform angeordnet, so daß es diese Formpfosten 46, 46' wieder in ihre Formposition an den Enden der Arme 44, 44' zurückhebt, wo diese wieder eingeklinkt werden, siehe Fig. 10 d.

In analoger Weise können in die runden Öffnungen des Mäanderbandes 45 zusätzliche Federelementen, wie z.B. Taschenfedern 30, eingesetzt werden, durch eine kontinuierlich arbeitende Maschine, wie sie in Fig. 11b und c skizziert ist.

Die Vorrichtung ist aufgebaut wie die in Fig.10c und d, aber anstelle der Formpfosten 46, 46' werden Taschenfedern 30 an den Enden der Arme 44, 44' gehalten und freigegeben, nachdem sie die runden Öffnungen in den Schaumstoff- Streifen 31 geformt haben. Der Nachschub von Taschenfedern 30 wird von den gegenüberliegenden Seiten den Armen 44, 44' nachgeliefert, siehe Fig. 11 c.

Die resultierenden, liegenden Mäanderband Abstandshalter 45', gefüllt mit Taschenfedern 30, werden vorteilhafter weise punktweise miteinander und mit den Deck- Platten (10, 10') und mit den Seitenriegeln 4 und 7 verklebt, siehe Fig. 11 a.

Natürlich kann auch eine Kombination der Vorrichtungen von Fig. 10b, c und 11 c, d eingesetzt werden und nur jede zweite oder vierte, etc. Öffnung mit zusätzlichen elastischen Federelementen gefüllt werden.

In Fig. 12a bis c sind mehrstöckige Matratzenkerne gezeigt, welche aus einem Stockwerk eines herkömmlichen Kerns, z.B. aus Bonnell- 72 oder Taschenfedern 72' bestehen, mit einer Topper 75 Lage oder umgeben von zwei Topper 75 und 75' Lagen, welche hier aus z.B. Sinus- förmigen Abstandshalter 15 mit einer Deck- 10 und einer Bodenplatte 10' bestehen. Die miteinander verbundenen Abstandshalter 15 können aus dem geschlitztem Ausgangsblock (1), wie in Fig. 2 a und 5 a beschrieben, hergestellt werden, und mit den Deckplatten 10 bzw. 10, 10' verklebt und damit als gestreckte Konfiguration fixiert werden.

Zwischen den Bonnell Federn 72 und dem Topper 75 kann ein dünner Polsterträger 79 eingesetzt werden, mit dem der Topper 75 verklebt ist, dabei wird der Polsterträger 79 durch die raue Oberfläche der äußeren Federringe und der Spiraldrähte 77 und durch die äußeren Schaumstoff- Riegel 4, 7 stationär gehalten.

Im Fall des inneren Taschenfederkerns 72' können die Topper 75, 75' punktweise an das Taschengewebe zur Fixierung verklebt werden.

Schon der zweistöckige Matratzenkern mit dem einseitigen Topper 75 kann die Höhe einer steifen box- spring Matratze erreichen, hat aber zwei unterschiedliche Seiten, eine weiche, punktelastische und eine härtere.

Während der dreistöckige Kern mit dem Taschenfeder- 72' Mittelteil eine sehr flexible, hoch punktelastische und hohe Matratze ergibt, welche auch sehr gut für Motor- und Verstellrahmen eingesetzt werden kann.

Fig. 13a bis c zeigen den Längs- und die Querschnitte innerer Dämfpungskerne für Wasserbetten, welche z.B. aus Sinus-förmigen, liegenden Abstandshaltern 15 bestehen, eingeschlossen und verklebt mit Seiten- Riegeln 4, 7 und mit oberen und unteren Schaumstoffstreifen 71, 71' . In Fig. 13c sind die verbundenen Abstandshalter 15 zwischen Deckplatten 70, 70' verklebt.

Dieser Dämpfungskern kann in dem Wasserbett mehr oder weniger frei floaten oder kann durch Plastikbänder (nicht gezeigt) oder Ringe, welche an die Innenwand der Wasserbett Hülle vulkanisiert, sind in Position gehalten werden.

In Fig. 13d ist eine zweistöckige Konfiguration mit zwei Lagen 75, 75' aus Sinus förmigen Abstandshalter 15 gezeigt, verklebt zwischen drei Schaumstoff- Platten, einer oberen 80', einer mittleren 80 und einer unteren 80" .

Diese zweistöckige Konfiguration kann auch als normaler mehrstöckiger Kern aus reinen Schaumstoff Teilen bestehend als normale Matratze verwendet werden. Diese erreicht dann leicht die Höhe einer amerikanischen box- spring Matratze.

## Patentansprüche

1. Abstandshalter zur Füllung von Matratzenkernen, Polsterungen und Kissen, **dadurch gekennzeichnet, daß**
elastisch stauchbare und flexible Abstandshalter (5, 5', 15, 15', 25, 25', 22, 22', 35, 35', 45, 45', 55, 55') aus Schaumstoff oder ähnlich stauchfähigem Material als Rippen oder Röhren artige Strukturen in Reihen stehend oder liegend angeordnet und miteinander verbunden, an mindestens einer Seite auf einer elastisch nachgiebigen Deckplatte (10,10', 70, 70', 80, 80') oder Umhüllung (20,20') angeordnet und darauf fixiert sind.

2. Abstandshalter nach Anspruch 1, **dadurch gekennzeichnet, daß**
a) Reihen von miteinander verbundenen Sinus-, X-, V-, 8-, Hohlzylinder oder Mäanderband förmige Abstandshalter (15, 15', 5, 5', 25, 25', 22, 22', 35, 35', 45, 45', 55, 55') aus Schaumstoff mit ihrer Formebene parallel liegend oder aufrecht stehend zwischen einer Deck-10 und einer Bodenplatte 10' oder einer Umhüllung (20,20') aus Schaumstoff- oder ähnlich nachgiebigen Material angeordnet sind , und
b) die Abstandshalter Reihen mit den Platten (10,10') oder Umhüllungen (20, 20') sowie den Seiten- Riegeln (4,7) an den Berührungs- Flächen zumindestens punktweise durch Verklebungen (9,9') verbunden sind.

3. Abstandshalter nach Anspruch 1 und 2, **dadurch gekennzeichnet**,
a) in einem Schaumstoff Ausgangsblock (1) durch eine Schneide Vorrichtung transversale, durch den Block (1) gehende Schlitze (2, 3) in versetzten Reihen so eingebracht sind, dass eine Schlitz (2) Reihe zur Seite hin offen und die andere (3) Reihe ein geschlossenes Endstück (8) aufweisen, und
b) der geschnittene Block (1) oben und an den Längsseiten mit Klebstoff (9',9) versehen ist,
c) und je ein Rechen (14) mit Zinken (16) in die erste und letzte Reihe von Schlitzen (3) eingreifen und den Ausgangsblock (1) der Länge L' auf die Länge L des inneren Matratzenkerns auseinanderziehen, wobei eine zusammenhängende Sinus artige Struktur von aufrecht stehenden Rippen (15) entsteht, und
d) Seiten - (7) und Querriegel (4) und eine Deckplatte (10) aus Schaumstoff an und auf diesen inneren Matratzenkern angedrückt und verklebt werden, und
e) nach Wenden dieser Voreinheit die Nulldurchgänge der Sinus artigen Rippen (15) und die Seiten - (7) und Querriegel (4) mit Klebstoff (9', 9) punkt - oder streifenweise belegt werden, und dann die Bodenplatte (10') aufgelegt und angepresst wird.

4. Abstandsthalter nach einem der Ansprüche 1 bis 3, **dadurch gekennzeichnet, daß**
a) aus einem Schaumstoff Ausgangsblock (1') Sinus- förmige Abstandshalter (25) Streifen mit einer Konturschneide Maschine ausgeschnitten sind,
b) diese Abstandshalter (25) Streifen mit ihrer Formebene parallel liegend oder aufrecht stehend zwischen Deckplatten 10 10' oder einer Umhüllung (20, 20') aus Schaumstoff eingesetzt und zumindestens punktweise verklebt (9) sind und benachbarte Streifen eine Phasenverschiebung von 180 Grad aufweisen und an den Extrema miteinander und an den Berührungsflächen auch mit den Seitenriegeln (4,7) verklebt sind, und
c) in den Schlitzaugen Öffnungen zwischen den Abstandsthalter (25) Streifen teilweise zusätzliche Federelemente (30) eingesetzt sind.

5. Abstandsthalter nach einem der Ansprüche 1 bis 3, **dadurch gekennzeichnet, daß**
a) ein Schaumstoff Ausgangsblock -(11') Streifen Kamm artig von beiden Seiten mit Schlitzen (2) versehen ist und
b) dieser Block (11') zu Abstandsthalter (5) Streifen auseinandergezogen ist, und
c) diese mit ihrer Formebene horizontal liegend oder aufrecht stehend zwischen Deckplatten 10 10' oder einer Umhüllung (20, 20') aus Schaumstoff eingebracht und mit dieser und miteinander verklebt (9) sind, und
d) im aufrecht stehenden Fall die Abstandshalter (5) Streifen so an den Berührungsflächen miteinander verklebt (9) sind, daß Rauten (12") und/oder Schlitzaugen (13") förmige Öffnungen entstehen, in die zusätzliche Federelemente (30) eingebracht werden können.

6. Abstandshalter nach einem der Ansprüche 1 bis 5, **dadurch gekennzeichnet, daß**
a) in einem Schaumstoff Ausgangsblock (11) Streifen Kamm artig von beiden Seiten kürzere (2") und längere (3") Schlitze eingebracht sind und letztere (3") zu einem geschlossenen Endstück (18) verklebt sind, der gleichen Breite (18') wie bei den kürzeren Schlitzen (2"), und
b) dieser geschlitzte Block (11) Streifen zu X- förmigen Abstandshalter (35) Streifen auseinandergezogen ist,
c) diese mit ihrer Formebene horizontal liegend oder aufrecht stehend zwischen Deckplatten (10, 10') oder einer Umhüllung (20, 20') aus Schaumstoff eingebracht und mit dieser und miteinander verklebt (9) sind, und
d) die X- förmigen Abstandsthalter (35) in der liegenden Version zu zweien aufeinandergesetzt und verklebt einen zweistöckigen Matratzenkern ergeben.

7. Abstandsthalter nach einem der Ansprüche 1 bis 6, **dadurch gekennzeichnet, daß**
a) ein oder zwei Lagen von Abstandshaltern (5', 5, 15, 15') mit einer außen verbundenen Deck- platte (10,10') als Topper (75,75') oben und/oder unten auf einem anderen, herkömmlichen Matratzenkern Teil, z.B. aus Bonnell- (72) oder Taschenfedern (72') angeordnet und mit diesem verbunden
b) horizontal liegende oder aufrecht stehende Abstandshaltern (15, 15') verklebt (9) zwischen Deck- Platten (10, 10') oder Streifen (71, 71') aus Schaumstoff in einer ein- oder zwei - stöckigen Konfiguration in der Hülle (74) eines Wasserbettes als Dämpfungs -Innenkern eingesetzt sind.

8. Vorrichtungen zur Herstellung des geschlitzten (2, 3, 2', 3') Ausgangsblock (1, 1') bestehend aus
a) je einem Paar unterschiedlich großer Walzen (22, 23) über die je ein Treibriemen (60) läuft zum Komprimieren und zum Transport des Ausgangsblockes (1) durch zwei getaktete Schneidewerkzeuge aus zwei Reihen von Stechmessern (28), oder
b) einer mechanischen Schneide- Apparatur mit in Reihe angeordneten Guillotine (27), Wiegemesser artigen oder dreieckigen, dünnen Schneideklingen (27') , welche durch Schlitze zweier Pressplatten (29, 29') gleiten, zwischen denen der Ausgangs- Block -(1, 11, 11, 11') gehalten und komprimiert ist, wobei entweder die Klingen (27,27') oder die Pressplatten (29,29') hin- und her bewegt werden, und die **dadurch** geschnittenen Schlitz (2, 3) und (2', 3') Reihen ungeschnittene Abstands- (8') und Endstücke (8) aufweisen, oder
c) einem oder mehreren Hochdruck- Wasserstrahlen, die in einem Arbeitsgang die Schlitz-(2, 3) und (2', 3') Reihen mit den ungeschnittene Abstands (8') und Endstücken (8) durch getaktetes Ausschalten und Vorrücken um die Schlitzlänge 1 und Abschalten des Wasserstrahles schneiden.

9. Abstandsthalter nach einem der Ansprüche 1 bis 8, **dadurch gekennzeichnet, dass**
a) der Ausgangs- Block (1, 1') aus Schaumstoff Zonen mit unterschiedlichem(r) Raumgewicht und Stauchhärte zusammengesetzt ist, die miteinander verklebt sind, und
b) in die Schlitzaugen- (12, 13"), Rauten- (12', 12") oder Dreieck- (13') förmigen Öffnungen zwischen den Sinus-, X-, V- oder Mäanderband -förmigen Abstandshaltern ( 15, 15', 5, 5', 25, 25', 35, 35', 45, 45') teilweise zusätzliche Federelemente (30) eingesetzt sind.

10. Vorrichtung zur Herstellung von zusammenhängenden Sinus- förmige Abstandshaltern (15, 15') ausgehend von einem Schaumstoff Ausgangsblock (1) mit transversalen Schlitzen (2, 3) **dadurch gekennzeichnet, daß**
a) an den ungeschnittenen Endstücken (8) Wagen (35) mit Hilfe von Nadeln (33) befestigt werden,
b) diese Wagen (35) in Schienen längs des Blockes (1) laufend mittels einer vielfachen Nürnberger Scheren Anordnung (35) von der Block (1) Länge L'auf die Länge L des inneren Matratzenkerns oder des Kissens auseinandergezogen werden, und
c) durch mindestens zwei Paare von großen Nürnberger Scheren (39) an den Enden des Blockes (1) in einer synchronen Bewegung der Block (1) gleichzeitig synchron longitudinal gestreckt und transversal von der Breite B' des Blockes (1) auf die Breite B des inneren Matratzenkerns oder des Kissens gestaucht wird.

11. Vorrichtung zur Herstellung von zusammenhängenden X-förmigen Abstandshaltern (15, 15') **dadurch gekennzeichnet, dass**
a) ausgehend von einem Schaumstoff Ausgangsblock (1) mit longitudinalen, alternierenden Schlitz (2', 3') Reihen mit dickeren und kürzeren Randstücken (7') und bestehend aus
b) Wagen (42), die an den ungeschnittenen Randstücken (7') mit Enterhaken ähnlichen Nadeln (43) befestigt sind, wobei
c) diese Wagen (42) transversal zur Spreizung des Blockes (1) auseinandergezogen werden, und durch mindestens zwei Paare von großen Nürnberger Scheren (39) in einer analogen Bewegung zu Anspruch 11 c) der Block (1) hier longitudinal von der Länge L' auf die Länge L des inneren Matratzenkerns gestaucht wird, bis sich die kürzeren Randstücken (7') berühren und die Längsriegel (7) ausbilden.

12. Vorrichtung zur Herstellung von Mäanderband förmige Abstandshalter (45) **dadurch gekennzeichnet**,
a) zwei Kreuze mit je vier Armen (44, 44'), an deren Enden Formpfosten (46, 46') senkrecht nach oben stehen, Zahnrad ähnlich so ineinandergreifen, daß
b) ein von einer Seite zugeführtes Schaumstoff Band (31) durch die Formpfosten (46, 46') in das Mäanderband geformt und dieses an den Berührungsflächen verklebt (9) wird, und
c) die Formpfosten (46, 46') nach der Formgebung nach unten aus den Armen (44, 44') herausgestoßen und auf einem Schneckenband (58) nach einer 3/4 Drehung der Arme (44, 44') wieder in ihre Ausgangsstellung zurückgehoben und dort eingeklinkt werden, oder
e) die Formpfosten (46,46') durch Zylinder- oder Tonnen förmige Spiral Federelemente (30) ersetzt und in den Öffnungen der Mäanderband förmigen Abstandshalter (45) belassen werden.

13. Abstandsthalter nach einem der Ansprüche 1 bis 11 **dadurch gekennzeichnet, daß**
a) Reihen von miteinander verbundenen Sinus-, X-, V-, 8-, Hohlzylinder- oder Mäanderband förmige Abstandsthalter (15, 15', 5, 5', 25, 25', 21, 21', 35, 35', 45, 45', 55, 55') aus Schaumstoff aufrecht stehend zwischen einer Deck- 10 und einer Bodenplatte 10' oder einer Umhüllung (20,20') aus Schaumstoff- oder ähnlich nachgiebigen Material mit der Ebene, in der die jeweilige Form liegt, senkrecht zu der Platten- (10,10') oder Umhüllungs- (20,20') Ebene angeordnet sind, und
b) besagte Abstandshalter Reihen mit den Platten (10,10') oder Umhüllungen (20,20') an den Berührungs- Flächen zumindestens punktweise durch Verklebungen (9, 9')verbunden sind.
